# EUROPEAN PATENT SPECIFICATION

(11) **EP 2 330 676 B1**
(45) Date of publication and mention of the grant of the patent: **11.03.2015**
(21) Application number: 09814626.9
(22) Date of filing: 17.09.2009
(51) Int. Cl.: H01M 4/20, H01M 2/28, H01M 4/62, H01M 4/68, H01M 4/73, H01M 10/12, H01M 4/04, H01M 4/16, H01M 4/74

(54) **LEAD ACID STORAGE BATTERY**
BLEISÄUREAKKUMULATOR
BATTERIE DE STOCKAGE AU PLOMB-ACIDE

(30) Priority: 22.09.2008 JP 2008243230
(43) Date of publication of application: 08.06.2011
(73) Proprietor: GS Yuasa International Ltd., Kisshoin, Minami-ku, Kyoto-shi, Kyoto 601-8520 (JP)
(72) Inventor: TSUBOI Yuichi, Kyoto-shi Kyoto 601-8520 (JP); SUZUKI Motoyuki, Kyoto-shi Kyoto 601-8520 (JP); HATA Kouji, Kyoto-shi Kyoto 601-8520 (JP); OSUMI Shigeharu, Kyoto-shi Kyoto 601-8520 (JP)
(74) Representative: Müller-Boré & Partner Patentanwälte PartG mbB
(86) International application number: PCT/JP2009/066243
(87) International publication number: WO 2010/032782

(56) References cited:
- EP-A1- 1 816 693
- JP-A- 11 250 894
- JP-A- 2003 151 617
- JP-A- 2007 273 403
- JP-A- 2007 328 979
- JP-A- 2008 140 645
- JP-A- 2008 171 701
- US-A- 5 169 734
- US-A1- 2007 009 790

## Description

### Technical Field

The present invention relates to a lead acid storage battery.

### Background Art

Conventionally, the lead acid storage battery has been used in the fully charged state in many cases. In the case of using the lead acid storage battery in the fully charged state, there have been problems, such as a problem caused when the lead acid storage battery is overcharged, that is, a problem of corrosion of the positive electrode grid, and a problem that the strap and the lug are exposed due to the reduction in the amount of the electrolyte solution and thereby corrosion occurs in the vicinity of the welding interface between the negative electrode strap and the lug.

Meanwhile, in recent years, attempts have been made to improve energy consumption efficiency in respective industrial fields in view of the problems such as the climate change due to the rapid increase in the amount of CO₂ emission, and the severe energy situations including the sharp rise in the oil price. Also in the automobile industry, a hybrid vehicle, a clean diesel vehicle, a plug-in hybrid vehicle, and an idling-stop vehicle have been developed.

In the hybrid vehicle, the idling-stop vehicle, and the like, which have been developed in recent years, a lead acid storage battery is used in a not fully charged state [Partial State of Charge (PSOC)] in order to store electricity generated during braking as much as possible, that is, to maximize the regeneration acceptance.

As the lead acid storage battery used in such partially charged state (lead acid storage battery for use in PSOC), a valve regulated lead acid storage (VRLA) battery has been developed which is configured by a positive electrode plate, a negative electrode plate, and a separator mainly made of a fine glass fiber (also referred to as AGM (Absorptive Glass Mat) separator), so as to hold an electrolyte solution therein. However, the VRLA battery uses expensive components in which the AGM separator is particularly expensive, and hence the VRLA battery itself becomes expensive. For this reason, an open type lead acid storage battery for use in PSOC, which is less expensive than the VRLA battery and which has excellent life performance, has been required.

Here, the open type lead acid storage battery means a lead acid storage battery having a structure in which the surrounding of the electrode plates is filled with a flowable electrolyte solution, and in which the inside and the outside of the battery are in communication with each other.

Further, it has been reported that, in the case where the lead acid storage battery is used in a partially charged state, for example, in the case where the lead acid storage battery is used for the application in a vehicle (idling-stop vehicle) incorporating an idling-stop system which temporarily stops an engine when predetermined conditions are satisfied, and the case where the cycle life test simulating the use mode of the idling-stop vehicle is carried out, a problem occurs, which does not occur during the conventional use in the fully charged state, that is, a problem occurs, in which the lug section of the negative electrode grid and the upper frame edge (the edge section at which the lug section is formed) of the negative electrode grid become thin (see, for example, Patent Documents 1 to 3).

Here, "becoming thin" means that the base body (here, the lug section, the upper frame edge, and the main body of the grid are together referred to as the base body) is corroded by a certain cause, and thereby the thickness of the base body remaining without being corroded becomes smaller than the thickness of the original base body.

In Patent Documents 1 to 3, the following techniques are proposed as the techniques for solving the above-described problem.
1. A lead-antimony based alloy is used for the strap, and a grid made of a lead-calcium (-tin) based alloy is used for the positive electrode and the negative electrode. Further, a layer made of a lead-antimony alloy is formed on the surface of the lug section of the negative electrode grid (Patent Document 1), or a layer made of a lead-tin-strontium alloy or a lead-tin-barium alloy is formed on the surface of the lug section of the negative electrode grid (Patent Document 2).
2. A lead alloy not containing antimony is used for portions, such as the strap, the inter-cell connecting section, and the electrode pole, which are in contact with the electrolyte solution (Patent Document 3).

Further, in Patent Documents 1 to 3, it is described that sulfation may become a problem when the lead acid storage battery is used in a use condition specific to an idling-stop vehicle or used in an insufficient charging state.
Patent Document 1: Japanese Patent Laid-Open No. 2006-210134
Patent Document 2: Japanese Patent Laid-Open No. 2007-18812
Patent Document 3: Japanese Patent Laid-Open No. 2008-140645
Document JP 2007 273 403 also discloses a prior art lead acid battery.

### Disclosure of the Invention

### (Problem to be solved by the Invention)

In the method proposed in Patent Document 1, the lead-calcium (-tin) based alloy is used for the positive electrode and the negative electrode grid in order to suppress the reduction in the amount of the electrolyte solution. However, since the hydrogen overvoltage of antimony contained in the lead-antimony alloy layer provided on the surface of the lug section of the negative electrode grid is small, the self-discharge amount of the lead acid storage battery is increased, or the reduced amount of the electrolyte solution is increased.

Further, in the method proposed in Patent Document 2, when a layer of a lead-tin-strontium alloy or a layer of a lead-tin-barium alloy is formed, the amount of tin is set to 2% or less. Although the method has an effect of preventing the thinning of the lug section of the negative electrode, the effect of the method has been insufficient.

On the other hand, in the method proposed in Patent Document 3, it is attempted to improve the thinning of the lug section of the negative electrode in the lead acid storage battery for use in PSOC, by not using antimony in the portions, such as the strap, the inter-cell connecting section, and the electrode pole, which are in contact with the electrolyte solution. However, in the case where the lead acid storage battery manufactured by this method is used as a vehicle battery subjected to vibration during use, the mechanical strength may not be sufficiently obtained.

The present invention has been completed on the basis of the above described circumstances. An object of the present invention is to provide a lead acid storage battery which, when being used in a partially charged state, suppresses the thinning of the negative electrode lug section and which has excellent cycle life performance.

### (Means for solving the Problems)

As a result of an extensive investigation to solve the above-described problem, the present inventors obtained a new finding that cannot be foreseen from conventional arts at all and that, when a lead-tin alloy layer is provided on the lug section of the negative electrode grid, an effect of suppressing the thinning of the lug section can be obtained significantly by addition of carbon. The present invention is based on this new finding.

That is, the present invention is to provide a lead acid storage battery featured by including: a positive electrode plate using a positive electrode grid body made of a lead-calcium-tin based alloy; an negative electrode plate using a negative electrode grid body including a negative electrode grid section filled with a negative electrode active material, an negative electrode edge section continuously connected to the edge of the negative electrode grid section, and an negative electrode lug section used for collecting current and formed to project from the negative electrode edge section, the negative electrode grid body being made of a lead-calcium based alloy or a lead-calcium-tin based alloy; a strap provided by integrating the plurality of negative electrode plates by welding the negative electrode lug sections with each other; an inter-cell connecting section continuously connected to the strap so as to connect between cells; and an electrode pole continuously connected to the strap so as to be connected to a terminal of the battery, the lead acid storage battery being featured in that, among the strap, the inter-cell connecting section, and the electrode pole, at least the strap is made of a lead-antimony based alloy, in that a lead-tin alloy layer made of tin and lead and unavoidable impurities is provided on the negative electrode lug section, and in that the negative electrode active material contains carbon in an amount corresponding to 0.25 to 0.75% of the mass of the negative electrode active material after the full charging of the lead acid storage battery.

According to the present invention, it is possible to secure sufficient mechanical strength because, among the strap, the inter-cell connecting section, and the electrode pole, at least the strap is made of the lead-antimony based alloy. Further, as will be described in detail below, according to the present invention, since the lead-tin alloy layer is provided on the lug section of the negative electrode grid and since carbon is contained in the negative electrode active material, it is possible to provide a lead acid storage battery which can suppress the thinning of the negative electrode lug section when the lead acid storage battery is used for the application in PSOC, and which has excellent cycle life performance.

The present invention may also be configured as follows:
In the negative electrode edge section, the lead-tin alloy layer may also be provided on the lug forming edge section at which the negative electrode lug section is projectingly formed. With this configuration, the thinning of the negative electrode lug section and the thinning of the lug forming edge section are prevented, so that the cycle life performance can be remarkably improved.

It is preferred that the content of tin contained in the lead-tin alloy layer provided on the negative electrode lug section is set to 5 mass % or more to 40 mass % or less. It is preferred that the content of tin contained in the lead-tin alloy layer provided on the lug forming edge section is set to 5 mass % or more to 40 mass % or less. This is because, with this configuration, the reduction in the amount of the electrolyte solution can be reduced, and as a result, the increase in the specific gravity of the electrolyte solution is prevented, and thereby the corrosion can be suppressed.

The lead acid storage battery according to the present invention may be used for a vehicle incorporating an idling-stop system that temporarily stops an engine when preset stop conditions are satisfied. According to the present invention, it is possible to obtain a lead acid storage battery which can suppress the thinning of the negative electrode lug section during use in the partially charged state, and which has excellent cycle life performance. Thus, the lead acid storage battery can be preferably used in a vehicle incorporating a lead acid storage battery for use in a partially charged state.

Note that the lead-calcium-tin based alloy, the lead-calcium based alloy, the lead-antimony based alloy, and the lead-tin alloy, described in the scope of claims, the specification, and the like, of this application are not limited to alloys containing only the described elements. The alloys may contain the other elements to such an extent that the effect of the present invention can be obtained.

Further, the mass % of each element of each of the alloys described in the scope of claims, the specification, and the like, of this application is expressed as a percentage relative to the total mass of all the elements forming the alloy. That is, the lead-tin alloy having the tin content of 5 mass % means an alloy containing lead and tin and having the content of tin of 5 mass %.

### (Advantages of the Invention)

According to the present invention, it is possible to provide a lead acid storage battery which can suppress the thinning of the negative electrode lug section during the use in a partially charged state, and which has excellent cycle life performance.

### Brief Description of the Drawings

[Figure 1]Figure 1 is a schematic diagram of a test method (potential step method) devised in order to reproduce corrosion of a lead alloy of a negative electrode under the PSOC condition;
[Figure 2]Figure 2 is a graph representing results of corrosion tests of lead-tin alloys with various degrees of tin content;
[Figure 3]Figure 3 is a schematic diagram representing a negative electrode grid body manufactured by an expansion method;
[Figure 4]Figure 4 is a schematic diagram representing a negative electrode grid body manufactured by a gravity casting method;
[Figure 5]Figure 5 is a graph representing a relationship between the carbon content in an negative electrode active material and the thinning of a negative electrode lug section; and
[Figure 6]Figure 6 is a graph representing a relationship between the carbon content in the negative electrode active material and the thinning of the negative electrode lug section per 10000 cycles.

### Description of Symbols

1···Negative electrode lug section
2···Upper frame edge (lug forming edge section)
3···Negative electrode grid section
4···Lower frame edge
5···Edge section
6···Leg section
10···Negative electrode grid body

### Best Mode for Carrying Out the Invention

The lead acid storage battery according to the present invention includes an electrode plate group formed by alternately laminating a plurality of positive electrode plates and a plurality of negative electrode plates via separators, and a battery case in which the electrode plate group is stored. The plurality of electrode plates configuring the electrode plate group are integrated together by connecting the lug sections of the electrode plates of the same polarity with each other by welding (as will be described in details below). The portion formed by integrating together the lug sections of the plurality of electrode plates by welding is the strap to which the inter-cell connecting section for connecting the adjacent cells with each other, and the electrode pole connected to the terminal of the battery are continuously connected, respectively.

The strap, the inter-cell connecting section, and the electrode pole are formed by a cast-on strap (COS) method using, for example, a lead-tin alloy, and a lead-antimony based alloy, such as a lead-antimony-arsenic-selenium alloy. Among the strap, the inter-cell connecting section, and the electrode pole, at least the strap is formed by using a lead-antimony based alloy which is excellent in mechanical strength.

The positive electrode plate has a positive electrode grid body filled with a positive electrode active material, while the negative electrode plate has a negative electrode grid body filled with a negative electrode active material.

A lead-calcium-tin based alloy is used as the material of the positive electrode grid body, while an alloy selected from a lead-calcium based alloy and a lead-calcium-tin based alloy is used as the material of the negative electrode grid body.

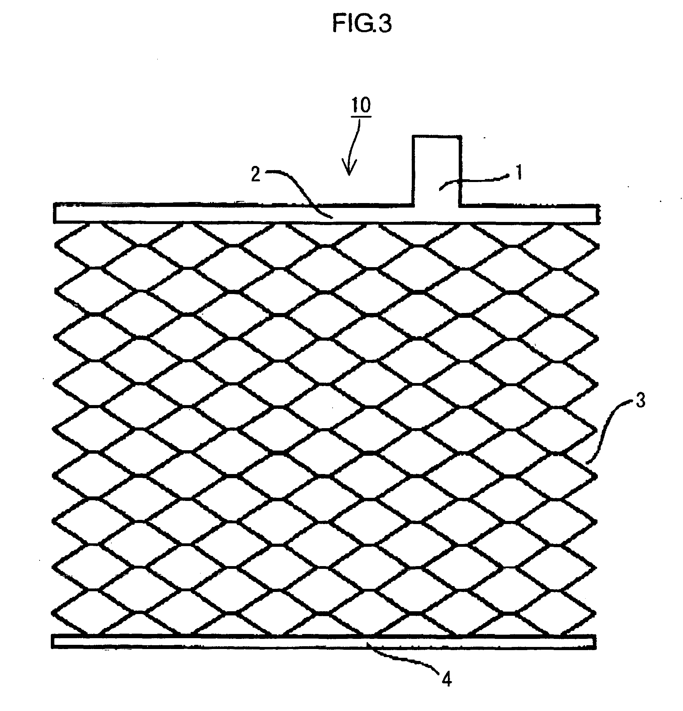

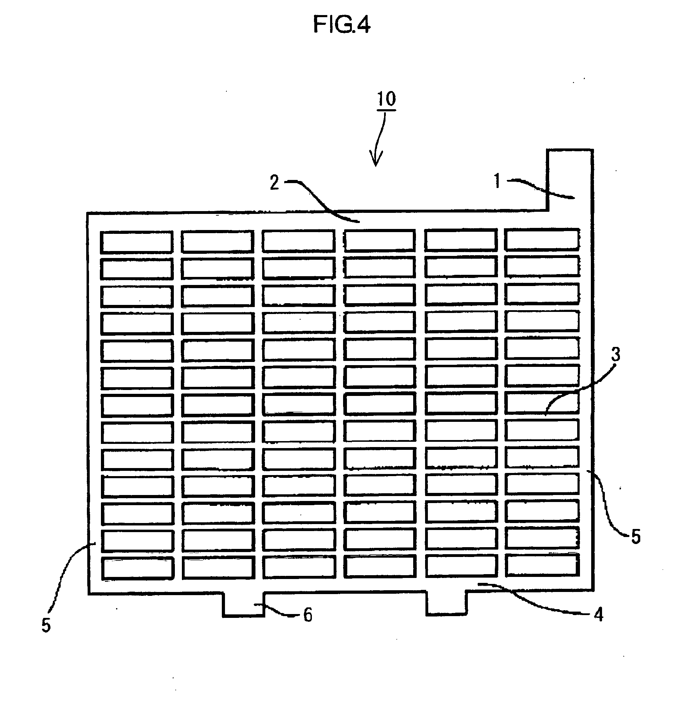

A negative electrode grid body 10 includes: a grid-shaped negative electrode grid section 3 filled with a negative electrode active material; a negative electrode edge section 2 continuously connected to the edge of the negative electrode grid section 3; and an negative electrode lug section 1 formed to project from the negative electrode edge section 2 for collecting current (see Figure 3 and Figure 4). Similarly to the negative electrode grid body, the positive electrode grid body includes: a grid-shaped positive electrode grid section filled with a positive electrode active material; a positive electrode edge section continuously connected to the edge of the positive electrode grid section; and a positive electrode lug section formed to project from the positive electrode edge section for collecting current, and has a shape as shown in Figure 3 and Figure 4.

The negative electrode grid body 10 shown in Figure 3 and Figure 4 will be specifically described.

The negative electrode grid body 10 shown in Figure 3 is manufactured by an expansion method, and includes the grid-shaped negative electrode grid section 3, the negative electrode edge sections 2 and 4 respectively continuously connected to the upper and lower edges of the negative electrode grid section 3, and the negative electrode lug section 1 formed to project from the upper negative electrode edge section 2. In the negative electrode grid body 10, the upper negative electrode edge section 2 (also referred to as an upper frame edge 2) corresponds to a lug forming edge section 2 at which the negative electrode lug section 1 is formed.

The negative electrode grid body 10 shown in Figure 4 is manufactured by a gravity casting method, the negative electrode edge sections 2, 4 and 5 are continuously connected to each other so as to surround the grid-shaped negative electrode grid section 3. In the negative electrode grid body 10, the negative electrode edge section 2 continuously connected to the upper edge of the negative electrode grid section 3 is the lug forming edge section 2 at which the negative electrode lug section 1 is projectingly formed. Note that a projecting section 6 formed to project from the lower frame edge 4 continuously connected to the lower edge of the negative electrode grid section 3 is a leg section 6.

The present invention is featured in that a layer (lead-tin alloy layer) made of an alloy containing lead and tin is provided in the negative electrode lug section. It is preferred that the lead-tin alloy layer is provided on the surface of the negative electrode lug section.

Note that the lug forming edge section, at which the negative electrode lug section is formed, is less likely to be thinned as compared with the negative electrode lug section. However, it is preferred to provide the lead-tin alloy layer not only on the negative electrode lug section but also on the lug forming edge section, because, when the lead-tin alloy layer is provided not only on the negative electrode lug section but also on the lug forming edge section, the thinning of the negative electrode lug section and the lug forming edge section can be prevented, and thereby the cycle life performance can be remarkably improved.

As a method for forming the lead-tin alloy layer on the surface of the negative electrode lug section and the lug forming edge section, a rolling method, a hot-dip plating method, and the like, are known. In the following description, the alloy layer formed on the surface of the negative electrode lug section, and the alloy layer formed on the surface of the lug forming edge section are referred to as surface layers. The rolling method is a method for laminating a metal foil or an alloy foil, used to form a surface layer, on a material (for example, a metal plate, an alloy plate, or the like) to be provided with the surface layer, and for rolling the material with the foil laminated thereon by rollers. On the other hand, the hot dip plating method is a method for plating a surface layer on a material (specifically, the negative electrode lug section and the lug forming edge section of the negative electrode grid body) to be provided with the surface layer, by immersing the material in a melting tank in which a material of the surface layer is melted.

In view of economy, it is preferred that the lead-tin alloy layer is formed into a rolled sheet having a predetermined thickness, by the rolling method only at a position at which the negative electrode lug section is to be formed or at positions at which the negative electrode lug section and the lug forming edge section are to be formed, and that a grid is then formed by the expansion processing or the punching processing. However, when a specially-shaped grid is used, the installation of an expansion apparatus or a punching apparatus itself is expensive. Thus, it is also possible that a conventional cast grid is used, and that the alloy layer is formed by the hot dip plating method before or after the filling of the paste.

In the present invention, the thickness of the surface layer is preferably adjusted to 5 to 200 microns (more preferably 10 to 60 microns). This is because, when the thickness of the surface layer is too small, the effect of suppressing the thinning of the negative electrode lug section and the lug forming edge section is reduced, and because, when the thickness of the surface layer is too large, the effect of suppressing the thinning of the negative electrode lug section and the lug forming edge section is saturated and the cost is also increased. Note that in the rolling method, the thickness of the surface layer can be adjusted by adjusting one of the thickness of the alloy plate (slab) used as the base material, the thickness of the sheet (metal foil and alloy foil) used to form the surface layer, and the thickness of the rolled sheet after rolling. Further, it is possible to form the surface layer only on the lug section or on both the lug section and the lug forming edge section by changing the width of the sheet (metal foil and alloy foil), and the like, used to form the surface layer.

In the present invention, even when the surface layer is not formed on the whole area of the surface of the negative electrode lug section and on the whole area of the surface of the lug forming edge section, it is possible to obtain the effect of suppressing the thinning of the negative electrode lug section and the lug forming edge section. However, it is preferred to form the surface layer on the whole area of the surface of the negative electrode lug section and on the whole area of the surface of the lug forming edge section.

In the present invention, it is preferred that the tin content in the lead-tin alloy forming the surface layer is set to 5 mass % or more to 40 mass % or less. This is because the effect of suppressing the thinning of the negative electrode lug section and the lug forming edge section is reduced when the tin content in the lead-tin alloy is set to less than 5 mass %. This is also because the reduced amount of the electrolyte solution is increased when the tin content in the lead-tin alloy is set to more than 40 mass %.

The present invention uses, as the negative electrode active material to be filled in the negative electrode grid body, a paste-like mixture obtained by mixing lead powder containing lead oxide as the main component, with additives, such as carbon, dilute sulfuric acid, and lignin. Here, in the present invention, when the paste of the negative electrode active material is manufactured, carbon is mixed in an amount corresponding to 0.25 to 0.75% of the mass of the negative electrode active material after the full charging of the lead acid storage battery. This is because, when the amount of carbon is less than the above-described range, it is not possible to obtain the effect of improving the thinning of the negative electrode lug section and the lug forming edge section. This is also because, when the contained amount of carbon is more than the above-described range, the effect of improving the thinning of the lug section is saturated, and at the same time, carbon is eluted into the electrolyte solution with the result that the electrolyte solution is contaminated to lower the visibility of the liquid surface, and that, when a device for measuring the liquid surface position or the specific gravity of the electrolyte solution is provided, the functions of the device are impaired and the visibility of the device is lowered.

The lead acid storage battery according to the present invention can be preferably used in a vehicle incorporating a lead acid storage battery for the application in PSOC, for example, in a vehicle incorporating an idling-stop system that temporarily stops an engine when preset stop conditions are satisfied.

### <Example>

### (1) Preliminary test

A method was searched for improving the thinning of the negative electrode lug section and the lug forming edge section under the condition in which the lead acid storage battery is used in a partially charged state (PSOC condition).

### (1.1) Formation of surface layer

An alloy having a composition of Pb-0.05%Ca-0.5%Sn was used as the alloy to be used as the base material of the negative electrode grid body, and the surface layer was formed by using the method (rolling method) described below.

An alloy plate (slab) having a thickness of 10 mm was manufactured by a continuous casting method, and an alloy sheet, having a thickness of 0.5 mm and used to form the surface layer, was superposed on each surface of the alloy plate. Then, the alloy plate with the alloy sheets superposed thereon was rolled by rolling rollers, so that a rolled sheet having a thickness of 0.8 mm was manufactured. The thickness of the surface layer was about 40 microns.

Next, the rolled sheet was expanded with a rotary expansion machine while the position of the rolled sheet was adjusted so as to allow the surface layer to be provided at desired positions of the negative electrode grid (expansion method). Thereby, the negative electrode grid with the surface layer formed at the predetermined positions (the lug section and the upper frame edge) was manufactured. The kind of the alloy sheet used to form the surface layer of each of the batteries is described in the column of Table 1, denoted as "Alloy composition of surface layer of lug section and upper frame edge".

For the purpose of comparison, the negative electrode grid not provided with the surface layer was also manufactured. The negative electrode grid not provided with the surface layer is indicated by the description "Without surface alloy layer" in the column of the Table 1, denoted as "Alloy composition of surface layer on lug section and upper frame edge".

### (1.2) Manufacturing method of negative electrode plate

The negative electrode grid provided with the surface layer obtained by the above-described method, and the negative electrode grid not provided with the surface layer, were filled with the paste for the negative electrode plate. As the paste for the negative electrode plate, a mixture was used which was obtained by adding lignin, a barium compound, carbon in the amount described in the table, and a predetermined amount of dilute sulfuric acid to lead powder (oxidation degree of 75%) containing lead oxide as the main component.

Carbon was added in an amount of about 0 to 1.5% of the mass of the negative electrode active material mass after the full charging of the lead acid storage battery. Note that the negative electrode plate with no addition of carbon was also manufactured for the purpose of comparison.

In the column of Table 1 denoted as "Carbon content", the content of carbon is described in a mass percentage relative to the mass of the negative electrode active material after the full charging of the lead acid storage battery, and the negative electrode plate with no addition of carbon is indicated by the description "No addition" in the corresponding column.

Next, an unformed negative electrode plate for 55D23 specified in Japanese Industrial Standard (JIS) D 5301 was obtained by aging the negative electrode plate filled with the paste for negative electrode plate at 35°C for three days.

### (1.3) Manufacturing method of positive electrode plate

A positive electrode grid manufactured by a rotary expansion method was used as the positive electrode plate. As the material of the positive electrode grid, an alloy plate (slab) having a composition of Pb-0.05%Ca-1.5%Sn and having a thickness of 10 mm was manufactured by a continuous casting method and then rolled with rolling rollers to a thickness of 0.9 mm. The positive electrode grid was filled with a paste for positive electrode plate. A mixture obtained by mixing lead powder containing lead oxide (oxidation degree of 75%) as the main component with a predetermined amount of dilute sulfuric acid was used as the paste for positive electrode plate. An unformed positive electrode plate for 55D23 was obtained by aging the positive electrode plate filled with the paste for positive electrode plate at 35°C for three days.

### (1.4) Manufacturing method of separator

A bag-shaped separator was manufactured in such a manner that a polyethylene resin separator formed by an extrusion molding method was double-folded, and that the two sides of the side portions of the double-folded separator were then mechanically sealed while only one side of the side portions of the double-folded separator was left as an opening section.

### (1.5) Forming method of unformed electrode plate group

The negative electrode plate was housed in the bag-shaped separator. An unformed electrode plate group was configured by alternately stacking the five positive electrode plates and the six negative electrode plates respectively housed in the separators. Then, the electrode plates of the same polarity were welded to each other by a cast-on strap (COS) method, and the unformed electrode plate groups were inserted into a battery case for 55D23. The adjacent cells were welded to each other by a resistance welding method, and then a lid was attached to the battery case by welding. As the material of the alloy used in the COS method (alloy used as the strap, the member for the inter-cell connecting section, and the electrode pole), an alloy having a composition of Pb-2.8%Sb-0.25%As-0.02%Se was used.

### (1.6) Formation method of lead acid storage battery

Dilute sulfuric acid having a predetermined specific gravity was injected into the battery case to which the lid was welded. Then, battery case formation (electric amount: 280% of theoretical capacity of the positive electrode active material, and formation time: 18 hours) was carried out in a water tank at 25°C, so that an open type lead acid storage battery (nominal voltage: 12V, rated capacity: 48Ah) of 55D23 size specified in JIS D 5301 was manufactured.

### (1.7) Idling-stop life test

The idling-stop life test specified in SBA S 0101 by Japan Battery Industry Association was carried out by using the lead acid storage batteries Z1 to Z11 manufactured in (1.6) and according to the following procedures.
Discharging: Discharging 1: 45A for 59 seconds
Discharging 2: 300A for 1 second
Charging: 14.0 V for 60 seconds

The idling-stop life test was carried out in such a manner that, after being subjected to 3600 cycles of the above-described charging and discharging cycle, each of the lead acid storage batteries was left as it was for 40 to 48 hours and then again subjected to 3600 cycles of the charging and discharging cycle. The life test was stopped when the total number of the charging and discharging cycles reached 18000. Then, the electrode plate was taken out from each of the lead acid storage battery, and the degree of sulfation and the thinning of the lug section were observed to obtain the observation results as shown in Table 1.

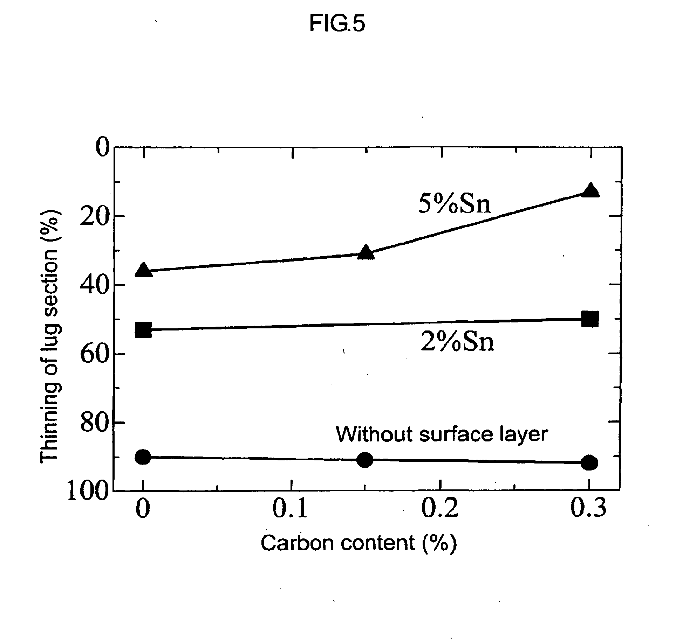

As for the degree of sulfation, the amount of lead sulfates (sulfation causing material) in the negative electrode active material was obtained for each of the lead acid storage batteries, and the obtained amount of lead sulfates was represented as a percentage relative to the amount of lead sulfates of the lead acid storage battery (battery number Z1) manufactured by using the negative electrode grid not provided with the surface layer. As for the degree of thinning of the lug section, the remaining thickness of the lug section of each of the batteries was measured, and the amount of reduced thickness was represented as a percentage relative to the thickness of the lug section before the cycle life test. The test results are shown in Figure 5 in which the abscissa represents the carbon content (%) and in which the ordinate represents the degree (%) of thinning of the lug section.

Further, the evaluation results of the test results are shown in Table 1. The evaluation was performed on the basis of the following evaluation references.

The evaluation of the degree of sulfation in the negative electrode of each of the batteries was performed in such a manner that the battery having lead sulfates in the negative electrode in an amount of less than 40% of the amount of lead sulfates in the negative electrode of the battery Z1 was marked by ○, that the battery having lead sulfates in the negative electrode in an amount of 40 % or more and 80% or less was marked by Δ, and that the battery having lead sulfates in the negative electrode in an amount of more than 80% was marked by ×.

The evaluation of the thinning of the lug section was performed in such a manner that the battery having a reduced thickness of less than 20% of the thickness before the cycle life test was marked by ⊚, that the battery having a reduced thickness of 20% or more and less than 40% was marked by ○, that the battery having a reduced thickness of 40% or more less than 70% was marked by Δ, and that the battery having a reduced thickness of 70% or more was marked by ×.

In Table 1, the composition of the alloy of the negative electrode grid, and the composition of the alloy of the surface layer of the lug section and the upper frame edge are also shown in addition to the test results.

In Table 1, for example, a description of Pb-0.05%Ca-0.5%Sn means a lead alloy made of calcium of 0.05 mass %, tin of 0.5 mass %, and lead of remaining mass % (99.45 mass % in this case). This notation is also used similarly in other tables and the description in the specification, and is also used for alloys having the other composition. However, the notation also includes the case where impurities (other elements) are contained in lead.

**[Table 1]**

| Battery number | Negative electrode grid | | Negative electrode active material | Evaluation of test results | | Test results (when ended at 18000 cycles) | | Remarks |
|---|---|---|---|---|---|---|---|---|
| | Alloy composition of negative electrode grid | Alloy composition of surface layer on lug section and upper frame edge | Carbon content (%) | Negative electrode sulfation | Thinning of lug section | Amount (%) of lead sulfate in negative electrode (in percentage relative to amount in battery Z1) | Thinning (%) of lug section (in percentage relative to initial thickness) | |
| Z1 | Pb-0.05%Ca-0.5%Sn | No surface alloy layer | No addition | × | × | 100 | 90 | Conventional example |
| Z2 | ↑ | No surface alloy layer | 0.15 | Δ | × | 73 | 91 | Comparison example |
| Z3 | ↑ | Pb-2%Sn | No addition | × | Δ | 94 | 53 | Comparison example |
| Z4 | ↑ | Pb-1% Sb | 0.15 | Δ | Δ | 61 | 41 | Comparison example |
| Z5 | ↑ | Pb-2%Sn-0.1%Sr | 0.15 | Δ | Δ | 70 | 46 | Comparison example |
| Z6 | ↑ | Pb-2%Sn-0.1%Ba | 0.15 | Δ | Δ | 71 | 45 | Comparison example |
| Z7 | ↑ | No surface alloy layer | 0.3 | ○ | × | 29 | 92 | Comparison example |
| Z8 | ↑ | Pb-5%Sn | No addition | × | ○ | 98 | 36 | Comparison example |
| 29 | ↑ | Pb-5%Sn | 0.15 | Δ | ○ | 74 | 31 | Comparison example |
| Z10 | ↑ | Pb-5%Sn | 0.3 | ○ | ⊚ | 26 | 13 | Example of the present invention |
| Z11 | ↑ | Pb-2%Sn | 0.3 | ○ | Δ | 30 | 50 | Example of the present invention |

From the results shown in Table 1 and Figure 5, it was seen that the thinning of the lug section can be improved in the battery in which a lead alloy layer containing tin is provided on the negative electrode lug section. In particular, it was found that a remarkable effect of suppressing the thinning of the lug section can be obtained in a battery in which a lead alloy layer containing tin of 5% or more is provided. Further, it was found that a more remarkable effect of suppressing the thinning of the lug section can be obtained in a battery in which a lead alloy layer containing tin of 5% or more is provided, and in which the amount of carbon added to the negative electrode is increased.

Note that the effect of suppressing the thinning of the lug section by increasing the carbon content in the negative electrode active material had not been previously found. However, from the above-described test results, it was found that, only in the case where a lead-tin alloy layer is provided on the lug section of the negative electrode grid, and where a lead-tin alloy layer is provided on the lug section and the upper frame edge (lug forming edge section) of the negative electrode grid, the remarkable effect of improving the thinning of the lug section can also be obtained by increasing the carbon content in the negative electrode active material. These results cannot be predicted from the prior knowledge at all.

### (2) Basic test

Next, in the case where an open type lead acid storage battery was used under the PSOC condition, it was confirmed that the lug section and the upper frame edge (lug forming edge section) of the negative electrode were thinned even in the electrolyte solution, and the measure against the thinning was investigated.

First, the electric potential of the negative electrode plate was measured on the basis of the assumed state of the lead acid storage battery during use in the idling-stop vehicle, and the investigation was performed on the basis of the measured values. Specifically, a corrosion test was carried out by the following method using a lead single plate (lead plate not containing active material powder and the like).

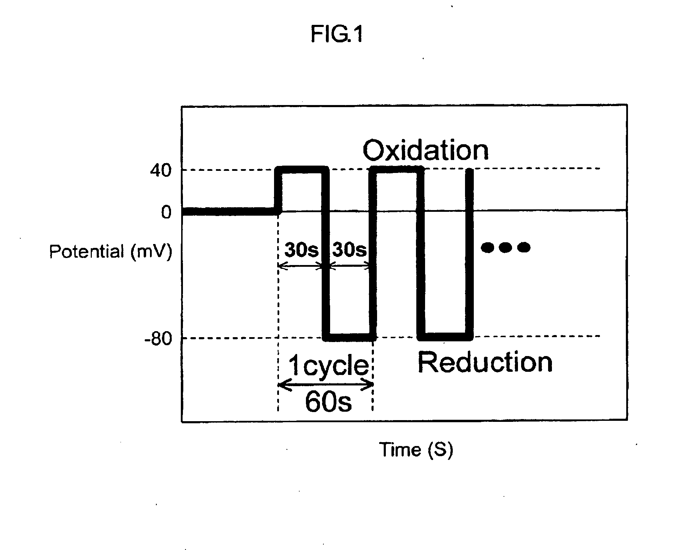

A lead single plate having a thickness of 0.8 mm and one side surface area of 24 cm² was prepared to be used as a working electrode. Next, a pure lead sheet larger than the working electrode, an electrolyte solution (dilute sulfuric acid 3.39 M), and a reference electrode (Pb/PbSO_{4/}H₂SO₄ 3.39 M electrode) were used to obtain a three-pole cell. The corrosion test was carried out by using these on the basis of the potential step method. The conditions of the potential step method are described as follows. The steps of the potential step method are schematically shown in Figure 1.
Ambient temperature: 40°C
Oxidation potential: +40 mV vs Pb/PbSO_{4/}H₂SO₄ 3.39 M (hereinafter the electric potential is determined on the basis of the reference electrode)
Reduction potential: -80mV

Set potential holding time: 168 hours (the oxidation potential holding time and the reduction potential holding time are both set to 30 seconds)

The amount of corrosion was obtained from the change in the mass of the electrode from which the corrosion layer was removed with an alkaline mannite solution after completion of the corrosion test.

Note that the working electrode was pretreated by being reduced at a temperature of 40°C in H₂SO₄ 3.39 M and at a current of 30 mA for 2 hours.

As a result of conducting the corrosion test, it could be confirmed that corrosion occurs even in the member (lead single plate) used in the negative electrode.

Next, in order to investigate the influence of tin content in a lead-tin alloy generally used in the negative electrode grid on the amount of corrosion, corrosion tests of lead-tin alloys having tin contents of 0 (pure lead) to 50 mass % were carried out. The corrosion tests were carried out not by using a battery but by using single plates made of lead and lead-tin alloys, similarly as described above under the conditions shown in Figure 1.

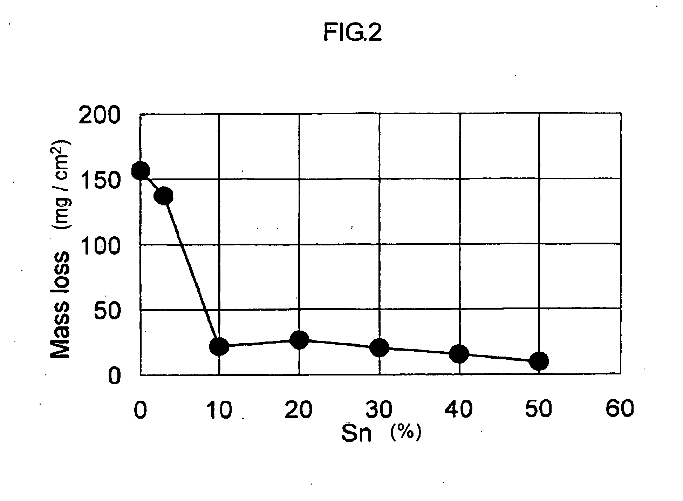

The results of the corrosion tests are shown in Figure 2. In Figure 2, the abscissa represents the amount (mass %) of Sn (tin) contained in the alloys, and the ordinate represents the amount of reduced mass (mg/cm²) per the area of the single plate subjected to the corrosion test. From the results shown in Figure 2, it became apparent that the corrosion of the negative electrode is significantly improved when the tin content is in the range of 10 to 50 mass %.

### (3) Main test (Example group 1)

The effect of the lead-tin alloy, which became apparent in the above-described basic test, was confirmed by using actual lead acid storage batteries.

Thus, lead acid storage batteries respectively provided with negative electrode grid bodies having the surface layer formed by using various lead-tin alloys (each having a tin content in the range of 2.5 mass % to 30 mass %) were manufactured, and the performance of each of the lead acid storage batteries was evaluated.

### (3-1) Manufacturing of lead acid storage batteries

Similarly to the method described in (1.1), negative electrode grids in which the surface layer was formed on the lug section and the upper frame edge, and negative electrode grids in which the surface layer was formed only on the lug section were manufactured.

The presence of the surface layer is described in the column denoted as "Surface layer on lug section" and the column denoted as "Surface layer on upper frame (meaning the surface layer on the upper frame edge) in Table 2. In Table 2, "Surface layer on upper frame" means "Surface layer on upper frame edge". "With" is described in the column corresponding to the portion provided with the surface layer, and "Without" is described in the column corresponding to the portion not provided with the surface layer.

The kind of the alloy sheet used to form the surface layer of each of the batteries is described in the column denoted as "Alloy composition of surface layer on lug section and upper frame edge" in Table 2.

A negative electrode grid not provided with the surface layer was also manufactured for the purpose of comparison. The negative electrode grid not provided with the surface layer is indicated by the description "Without surface alloy layer" in the column denoted as "Alloy composition of surface layer on lug section and upper frame edge" in Table 2.

Similarly to (1-2) to (1-6), open type lead acid storage batteries (nominal voltage: 12 V, rated capacity:48 Ah) having 55D23 size specified in JIS D 5301 were manufactured by using the negative electrode grids respectively provided with the surface layers obtained by the above-described method.

### (3.2) Idling-stop life test

The idling-stop life test specified in SBA S 0101 by Japan Battery Industry Association was carried out on the basis of the following procedures by using the lead acid storage batteries A1 to A9, B1 to B8, C1 and D1 manufactured in (3.1).

### Discharging: Discharging 1: at 45 A for 59 seconds

Discharging 2: at 300 A for 1 second
Charging: at 14.0 V for 60 seconds

The idling-stop life test was carried out in such a manner that, after being subjected to 3600 cycles of the above-described charging and discharging cycle, each of the lead acid storage batteries was left as it was for 40 to 48 hours and then again subjected to 3600 cycles of the charging and discharging cycle.

Each of the lead acid storage batteries was determined to reach the end of its life when the voltage of the lead acid storage battery after one second from the start of discharge at 300 A (discharging 2) was less than 7.2 V, and the total number of the charging and discharging cycles until this time was obtained as the number of life cycles as shown in Table 2. Note that the number of the target life cycles in this life cycle test is set to 30000.

Each of the lead acid storage batteries determined to have reached the end of their life was disassembled to investigate the cause of failure, and also the electrode plate was taken out from the lead acid storage battery to observe the thinning of the lug section and the thinning of the upper frame edge, so that the results were obtained as shown in Table 2.

The remaining thickness of each of the lug section and the upper frame edge was measured for each of the batteries determined to have reached the end of their life, and the degree of the reduced thickness of each of the lug section and the upper frame edge was represented in a percentage relative to the thickness of each of the lug section and the upper frame edge of the battery before the cycle life test.

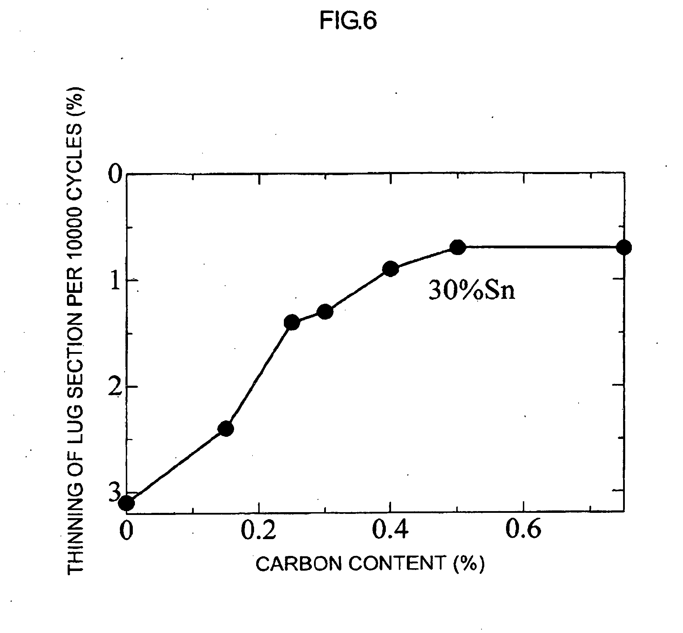

Further, the degree of the thinning of the lug section per 10000 cycles and the degree of the thinning of the upper frame edge per 10000 cycles were calculated as shown in Table 2, respectively. Among the test results, the relationship between the carbon content (%) and the degree of thinning (%) of the lug section provided with the surface layer with tin content of 30% is shown in Figure 6 in which the abscissa represents the carbon content (%) and in which the ordinate represents the degree of thinning (%) of the lug section per 10000 cycles.

Further, the reduced amount of the electrolyte solution (reduced liquid amount) was calculated from the change in the mass of each of the batteries before and after the cycle life test, as shown in Table 2. In Table 2, the reduced liquid amount is represented in a percentage relative to the reduced liquid amount of the lead acid storage battery (battery number A1) manufactured by using the negative electrode grid not provided with the surface layer.

When carbon is eluted into the electrolyte solution, the electrolyte solution is contaminated, and the position of the liquid surface becomes difficult to be viewed from the outside of the lead acid storage battery. Thus, the carbon elution was determined by the following methods, to obtain the results as shown in Table 2.

Each of the batteries after the cycle test was visually checked. When the position of the liquid surface could be visually recognized, the degree of carbon elution in the battery was determined to be low. When the position of the liquid surface could not be visually recognized without being viewed from the side surface of the battery by irradiating light to the side surface opposite to the viewing side surface, the degree of carbon elution in the battery was determined to be middle. When the position of the liquid surface could not be visually recognized by these methods, the degree of carbon elution in the battery was determined to be high.

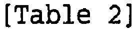

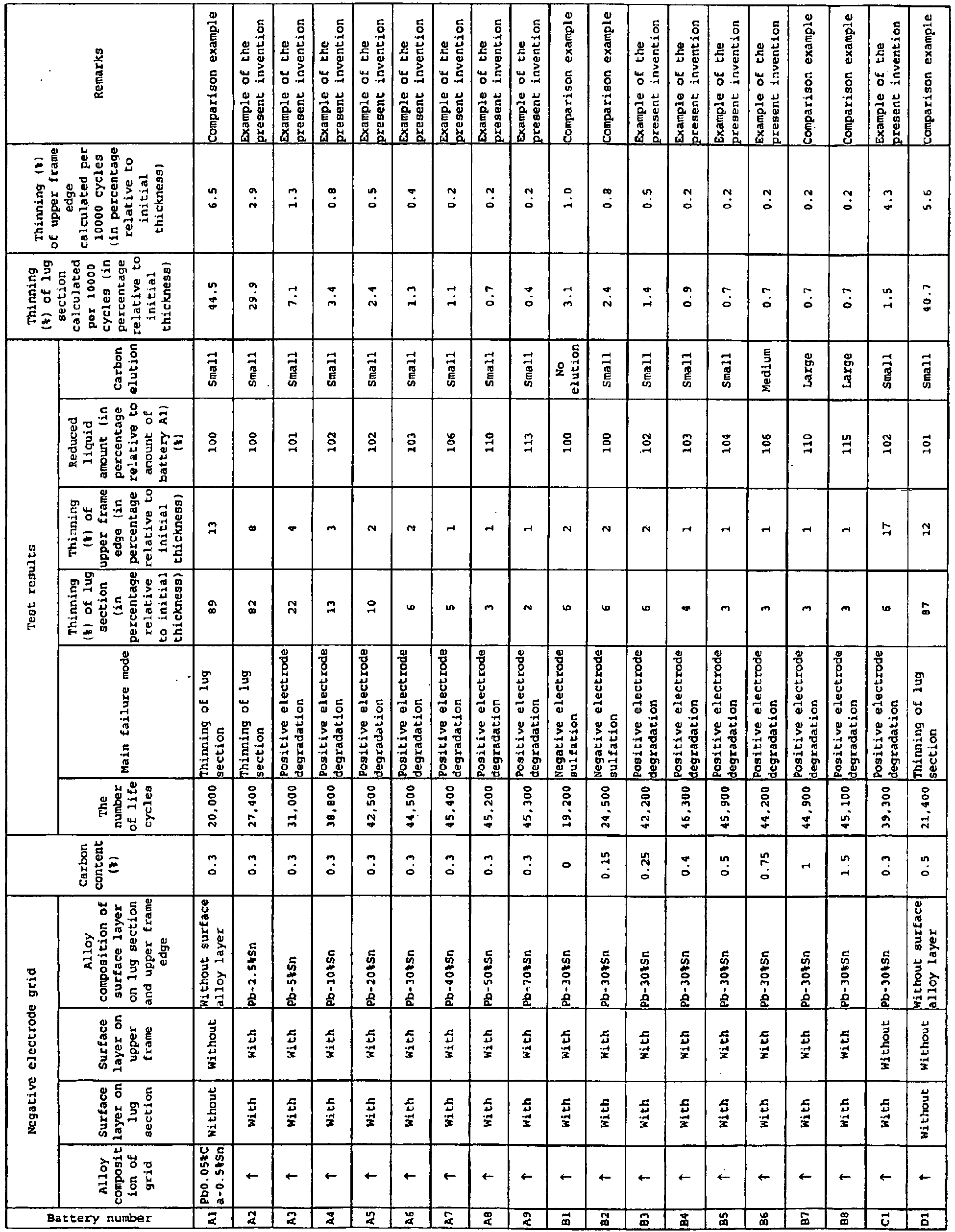

From Figure 5 and Figure 6, it was seen that, in the battery having the lead alloy layer with tin content of 5% or more, when the carbon content in the negative electrode is 0.25% or more, the effect of suppressing the thinning of the lug section can be remarkably obtained by the addition of carbon. From the fact that the particularly excellent effect of suppressing the thinning of the lug section of the negative electrode can be obtained, the amount of carbon contained in the negative electrode is preferably set to 0.30% or more, more preferably set to 0.40% or more, and still more preferably set to 0.50% or more.

The cycle life performance of the lead acid storage batteries (battery numbers A3 to A9 and B3 to B8), manufactured by using the negative electrode grid in which the alloy layer with tin content of 5% or more was formed on the surface of the lug section and the lug forming edge section of the negative electrode grid, and in which carbon was added in an amount of 0.25% or more, was significantly excellent as compared with the cycle life performance of the lead acid storage batteries (battery numbers A1 and A2) manufactured by using the negative electrode grid not provided with the surface layer or by using the negative electrode grid with the surface layer of less tin content, and also as compared with the cycle life performance of the lead acid storage batteries (battery numbers B1 and B2) manufactured by using the negative electrode plate with no addition of carbon or by using the negative electrode plate with the less addition amount of carbon. However, in the lead acid storage batteries with carbon content of 1% or more (battery numbers B7 and 88), carbon was eluted from the negative electrode plate during the test and thereby the electrolyte solution was contaminated, so that the position of the liquid surface was made difficult to be viewed from the outside of the battery and also the indication of the specific gravity meter of the electrolyte solution was also made difficult to be viewed. Therefore, the carbon content is preferably set to 0.75% or less.

By comparing the lead acid storage batteries (battery numbers A1 to A9) with each other, it became apparent that the thinning of the lug section and the lug forming edge section can be more suppressed as the concentration of tin contained in the surface layer is increased. For this reason, the concentration of tin contained in the surface layer is preferably set to 5% or more, more preferably set to 10% or more, and still more preferably set to 20% or more.

On the other hand, the reduced liquid amount tends to be increased as the concentration of tin contained in the surface layer is increased. When the concentration of tin contained in the surface layer is increased to 50 mass % or more, the reduced liquid amount was particularly increased. In the above-described tests, the reduced liquid amount exerted no influence on the number of life cycles. However, the large reduced liquid amount is not preferred, because various use conditions can be considered in the actual use of the lead acid storage battery, and hence when the reduced liquid amount is large, the promotion of corrosion of the positive electrode members, and the like, due to the increase in the specific gravity of the electrolyte solution is expected. Therefore, the concentration of tin contained in the surface layer is preferably set to less than 50 mass %, more preferably set to 40 or less mass %, and still more preferably set to 30 or less mass %.

Note that it can be seen that in any of the tests of the lead acid storage batteries, the amount of the thinning of the lug forming edge section is smaller than the amount of the thinning of the lug section, and hence the influence of the lug forming edge section on the life of the lead acid storage battery is smaller than the influence of the lug section. Although an improvement can be recognized in the lead acid storage battery (battery number C1) in which the alloy layer containing tin was provided only on the lug section, it can be seen from the comparison between the lead acid storage batteries (battery numbers A6 and C1) that it is preferred to provide the tin-containing alloy layer not only on the lug section but also on the lug forming edge section.

On the other hand, the amount of the thinning of the lug section and the lug forming edge section cannot be reduced in the lead acid storage battery (battery number D1) in which the surface layer was not provided and in which the carbon content was increased. For this reason, it can be seen that the effect of improving the thinning of the lug section, and the like, of the negative electrode is not obtained only by adding carbon to the negative electrode, and that, only when the addition of carbon is combined with the provision of the alloy layer containing tin, the effect of improving the thinning of the lug section, and the like, of the negative electrode is remarkably obtained.

From the above, it is preferred that, in an actual lead acid storage battery, the concentration of tin contained in the surface layer is set to 5 to 40%, and that the content of carbon in the negative electrode active material corresponds to 0.25 to 0.75 mass % of the negative electrode active material mass after the full charging of the lead acid storage battery.

### (Example group 2)

Similarly to the battery (battery number A6) manufactured in Example group 1, an open type lead acid storage battery (battery number E1) was manufactured by using the same positive electrode plate and the same negative electrode plate as those of the battery of battery number A6, except for the strap, the inter-cell connecting member, and the electrode pole which were formed by an alloy used in the COS method and having the composition of Pb-1%Sn. The following vibration test was carried out by using the battery A6 and the battery E1.
Vibration direction: vertical simple harmonic motion
Double amplitude: 2.3 to 2.5 mm
Acceleration: 29.4 m/s²
Vibration time: 4 hours
The results are shown in Table 3.

**[Table 3]**

| Battery number | Negative electrode grid | | Carbon content (%) | Alloy composition of lead component | Vibration test results | Remarks |
|---|---|---|---|---|---|---|
| | Alloy composition of grid | Alloy composition of surface layer on lug section and upper frame edge | | | | |
| A6 | Pb-0.05%Ca-0.5%Sn | Pb-30%Sn | 0.3 | Pb-2.8%Sb-0.25%A_{S}-0.02%Se | Without reaching life time in 4 hours | Example of the present invention |
| E1 | Pb-0.05%Ca-0.5%Sn | Pb-30%Sn | 0.3 | Pb-1%Sn | Reached life time in 2.5 hours | Comparison example |

The battery E1 reached the end of its life for 2.5 hours, while the battery A6 according to the present invention was found to have the life over 4 hours. It is conceivable that this is because the mechanical strength of the Pb-2.8%Sb-0.25%As-0.02%Se alloy used in the battery A6 was far more superior to the mechanical strength of the Pb-1%Sn alloy used in the battery E1.

### <Other embodiments>

(1) In the above described examples, the negative electrode grid formed by applying the expansion processing to a rolled sheet was used, but the negative electrode grid formed by applying punching processing to a rolled sheet may also be used.
(2) When a lead-tin alloy layer is provided on the lug section and the lug forming edge section of the negative electrode, the lead-tin alloy layer may be formed in the grid section. Even in such a case, the present invention acts effectively.

### Industrial Applicability

As described above, the present invention can provide a lead acid storage battery which, when used under the PSOC condition such as in an idling-stop vehicle, can suppress the thinning of the lug section and the lug forming edge section of the negative electrode grid and has excellent life performance. In particular, the present invention can provide an open type lead acid storage battery which is effective for practical use. Therefore, the industrial use of the present invention is very effective.

## Claims

1. A lead acid storage battery comprising:
a positive electrode plate using a positive electrode grid body made of a lead-calcium-tin based alloy;
a negative electrode plate using a negative electrode grid body (10) including a negative electrode grid section (3) filled with a negative electrode active material, a negative electrode edge section (2, 4, 5) continuously connected to the edge of the negative electrode grid section (3), and a negative electrode lug section (1) used for collecting current and provided to project from the negative electrode edge section (2), the negative electrode grid body (10) being made of either a lead-calcium based alloy or a lead-calcium-tin based alloy;
a strap provided by integrating the plurality of negative electrode plates by welding the negative electrode lug sections (1) with each other;
an inter-cell connecting section continuously connected to the strap so as to connect between cells; and
an electrode pole continuously connected to the strap so as to be connected to a terminal of the battery,
wherein, among the strap, the inter-cell connecting section, and the electrode pole, at least the strap is made of a lead-antimony based alloy,
wherein a lead-tin alloy layer made of tin and lead and unavoidable impurities is provided on the negative electrode lug section (1), and
wherein the negative electrode active material contains carbon in an amount corresponding to 0.25 to 0.75% of the mass of the negative electrode active material after the full charging of the lead acid storage battery.

2. The lead acid storage battery according to claim 1, wherein, in the negative electrode edge section (2, 4, 5), a lead-tin alloy layer is provided on the lug forming edge section (2) at which the negative electrode lug section (1) is projectingly provided.

3. The lead acid storage battery according to one of claim 1 and claim 2, wherein the content of tin contained in the lead-tin alloy layer provided on the negative electrode lug section (1) is set to 5 mass % or more to 40 mass % or less.

4. The lead acid storage battery according to claim 2, wherein the content of tin contained in the lead-tin alloy layer provided on the lug forming edge section (2) is set to 5 mass % or more to 40 mass % or less.

5. The lead acid storage battery according to claim 3, wherein the content of tin contained in the lead-tin alloy layer provided on the lug forming edge section (2) is set to 5 mass % or more to 40 mass % or less.

6. The lead acid storage battery according to any one of claims 1 to 5, wherein the negative electrode active material contains carbon in an amount corresponding to 0.4 to 0.75% of the mass of the negative electrode active material after the full charging of the lead acid storage battery.

## Patentansprüche

1. Bleisäureakkumulator, umfassend:
eine positive Elektrodenplatte unter Verwendung eines Gitterkörpers der positiven Elektrode, hergestellt aus einer Legierung auf Blei-Calcium-Zinn-Basis,
eine negative Elektrodenplatte unter Verwendung eines Gitterkörpers (10) der negativen Elektrode, einschließend einen Gitterabschnitt (3) der negativen Elektrode, gefüllt mit einem Aktivmaterial der negativen Elektrode, wobei ein Kantenabschnitt (2, 4, 5) der negativen Elektrode kontinuierlich an die Kante des Gitterabschnitts (3) der negativen Elektrode verbunden ist, und wobei ein Anschlussstück- bzw. Bügelabschnitt (1) der negativen Elektrode zum Stromsammeln verwendet wird und angeordnet ist, um von dem Kantenabschnitt (2) der negativen Elektrode hervorzuragen, wobei der Gitterkörper (10) der negativen Elektrode entweder aus einer Legierung auf Blei-Calcium-Basis oder einer Legierung auf Blei-Calcium-Zinn-Basis hergestellt ist,
einen Streifen bzw. band, bereitgestellt durch Integrieren der Vielzahl von negativen Elektrodenplatten durch Verschweißen der Bügelabschnitte (1) der negativen Elektroden miteinander,
einen Zwischen-Zell-verbindenden Abschnitt, kontinuierlich verbunden an den Streifen, um derart zwischen den Zellen zu verbinden, und
einen Elektrodenpol, kontinuierlich verbunden an den Streifen, um so an einen Endpunkt der Batterie verbunden zu sein,
wobei unter dem Streifen bzw. dem Band, dem Zwischen-Zell-verbindenden Abschnitt und dem Elektrodenpol mindestens der Streifen aus einer Legierung auf Blei-Antimonbasis ist,
wobei eine Blei-Zinn-Legierungsschicht hergestellt aus Zinn und Blei und unvermeidbaren Verunreinigungen auf dem Bügelabschnitt (1) der negativen Elektrode angeordnet ist, und
wobei das Aktivmaterial der negativen Elektrode Kohlenstoff in einer Menge entsprechend 0,25 bis 0,75% der Masse des Aktivmaterials der negativen Elektrode nach dem vollständigen Laden des Bleisäureakkumulators enthält.

2. Bleisäureakkumulator gemäß Anspruch 1, wobei in dem Kantenabschnitt (2, 4, 5) der negativen Elektrode eine Blei-Zinn-Legierungsschicht auf dem Bügel-bildenden Kantenabschnitt (2), an welcher der Bügelabschnitt (1) der negativen Elektrode hervorragend angeordnet ist, vorgesehen ist.

3. Bleisäureakkumulator gemäß einem der Ansprüche 1 gemäß einem von Anspruch 1 und Anspruch 2, wobei der Anteil an Zinn, enthalten in der Blei-Zinn-Legierungsschicht, angeordnet auf dem Bügelabschnitt (1) der negativen Elektrode, auf 5 Masse-% oder mehr bis 40 Masse-% oder weniger eingestellt ist.

4. Bleisäureakkumulator gemäß Anspruch 2, wobei der Anteil an Zinn, enthalten in der Blei-Zinn-Legierungsschicht, angeordnet auf dem Bügel-bildenden Kantenabschnitt (2), auf 5 Masse-% oder mehr bis 40 Masse-% oder weniger eingestellt ist.

5. Bleisäureakkumulator gemäß Anspruch 3, wobei der Anteil an Zinn, enthalten in der Blei-Zinn-Legierungsschicht, angeordnet auf dem Bügel-bildenden Kantenabschnitt (2), auf 5 Masse-% oder mehr bis 40 Masse-% oder weniger eingestellt ist.

6. Bleisäureakkumulator gemäß einem der Ansprüche 1 bis 5, wobei das Aktivmaterial der negativen Elektrode Kohlenstoff in einer Menge entsprechend 0,4 bis 0,75 Prozent der Masse des Aktivmaterials der negativen Elektrode nach vollständigem Laden des Bleisäureakkumulators enthält.

## Revendications

1. Accumulateur au plomb-acide comprenant :
une plaque d'électrode positive utilisant un corps de grille d'électrode positive réalisé en un alliage à base de plomb-calcium-étain ;
une plaque d'électrode négative utilisant un corps de grille d'électrode négative (10) comportant une section de grille d'électrode négative (3) remplie d'un matériau actif d'électrode négative, une section de bord d'électrode négative (2, 4, 5) raccordée de manière continue au bord de la section de grille d'électrode négative (3) et une section de patte d'électrode négative (1) utilisée afin de collecter un courant et agencée de manière à s'étendre à partir de la section de bord d'électrode négative (2), le corps de grille d'électrode négative (10) étant réalisé soit en un alliage à base de plomb-calcium soit en un alliage à base de plomb-calcium-étain ;
une bande formée en intégrant la pluralité de plaques d'électrodes négatives par soudage des sections de patte d'électrode négative (1) les unes aux autres ;
une section de liaison inter-cellules raccordée de manière continue à la bande afin d'assurer une liaison entre les cellules ; et
un pôle d'électrode relié de manière continue à la bande afin d'être raccordé à une borne de la batterie,
dans lequel, parmi la bande, la section de liaison inter-cellules et le pôle d'électrode, au moins la bande est réalisée en un alliage à base de plomb-antimoine,
dans lequel une couche d'alliage plomb-étain à base d'étain et de plomb et d'impuretés inévitables est formée sur la section de patte d'électrode négative (1), et
dans lequel le matériau actif d'électrode négative contient du carbone en une quantité correspondant de 0,25 à 0,75 % de la masse du matériau actif d'électrode négative après la charge complète de l'accumulateur au plomb-acide.

2. Accumulateur au plomb-acide selon la revendication 1, dans lequel, dans la section de bord d'électrode négative (2, 4, 5), une couche d'alliage plomb-étain est formée sur la section de bord formant patte (2), au niveau de laquelle la section de patte d'électrode négative (1) est formée en saillie.

3. Accumulateur au plomb-acide selon l'une des revendication 1 et 2, dans lequel la teneur de l'étain contenu dans la couche d'alliage de plomb-étain formée sur la section de patte d'électrode négative (1) est définie entre 5 % en masse ou plus et 40 % en masse ou moins.

4. Accumulateur au plomb-acide selon la revendication 2, dans lequel la teneur de l'étain contenu dans la couche d'alliage de plomb-étain formée sur la section de bord formant patte (2) est définie entre 5 % en masse ou plus et 40 % en masse ou moins.

5. Accumulateur au plomb-acide selon la revendication 3, dans lequel la teneur de l'étain contenu dans la couche d'alliage de plomb-étain formée sur la section de bord formant patte (2) est définie entre 5 % en masse ou plus et 40 % en masse ou moins.

6. Accumulateur au plomb-acide selon l'une quelconque des revendications 1 à 5, dans lequel le matériau actif d'électrode négative contient du carbone en une quantité correspondant à 0,4 à 0,75 % de la masse du matériau actif d'électrode négative après la charge complète de l'accumulateur au plomb-acide.
